# EUROPÄISCHE PATENTSCHRIFT

(11) **EP 0 849 125 B1**
(45) Veröffentlichungstag und Bekanntmachung des Hinweises auf die Patenterteilung: **29.08.2001**
(21) Anmeldenummer: 97119640.7
(22) Anmeldetag: 10.11.1997
(51) Int. Cl.: B60R 21/20

(54) **Abdeckung für eine Gassackrückhalteeinrichtung**
Door for an airbag restraining device
Couvercle pour un système de retenue par coussin de sécurité

(30) Priorität: 19.12.1996 DE 19653174
(43) Veröffentlichungstag der Anmeldung: 24.06.1998
(73) Patentinhaber: Bayerische Motoren Werke Aktiengesellschaft, 80788 München (DE)
(72) Erfinder: Kühl, Michael, 86899 Landsberg (DE)

(56) Entgegenhaltungen:
- EP-A- 0 465 869
- US-A- 5 474 324
- PATENT ABSTRACTS OF JAPAN vol. 096, no. 008, 30.August 1996 & JP 08 091163 A (TOYOTA MOTOR CORP), 9.April 1996,

## Beschreibung

Die Erfindung betrifft eine Abdeckung für eine Gassackrückhalteeinrichtung nach dem Oberbegriff des Hauptanspruchs.

In der DE 41 37 926 A1 wird eine Luftsackabdeckung in einer Instrumententafel beschrieben, die aus zwei Schichten besteht, wobei eine Schicht ein Abschlußelement aus einer elastomeren Schaumstoffschicht ist, das durch einen Schmelzkleber mit der anderen Schicht verbunden ist. Diese Luftsackabdeckung ist über ein bandförmiges Gelenk mit der Armaturentafel verbunden.

Eine solche Verbindung, wie in Fig. 2 und Fig. 3 von DE 41 37 926 A1 gezeigt, über Schrauben oder Nieten, die quer zur Kraftrichtung verlaufen, wenn die Luftsackabdeckung vom Luftsack aufgestoßen wird, besitzt nur eine geringe mechanische Festigkeit.

In der US 5474324 wird ein Airbag System beschrieben, mit einem Hohlkörper als Abdeckung, in dessen Innenraum Anbindungsmittel für die Abdeckung um ein dort angebrachtes Verankerungsmittel herum geschlungen sind.

Die EP 465 869 A1 beschreibt den nächstliegenden Stand der Technik, eine Abdeckung für eine Gassackrückhalteeinrichtung in einer Armaturentafel eines Kraftfahrzeugs, aus mindestens einem formsteifen Kern und mindestens einer Polsterschicht. Die Gassackrückhalteeinrichtung besteht aus einem Gassackmodul hinter der Armaturentafel. Die Abdeckung dient zum Verschließen einer Öffnung in der Armaturentafel und wird nach dem Auslösen des Gassackmoduls von einem Gassack zum Innenraum des Kraftfahrzeugs hin aufgestoßen und von mindestens einem Scharnierband, mindestens auf einer Teilstrecke ihrer Öffnungsbewegung, auf einer definierten Bewegungsbahn gehalten. Dabei ist das Schamierband mit der Abdeckung verbunden, indem es durch Ausnehmungen des Kerns durchgeführt, an einem Ende mit diesem formschlüssig verbunden und von der Polsterschicht mindestens teilweise umgeben ist.

Eine Verbindung zwischen Schamierband und Kern, wie in den Figuren 2 und 3 von EP 465 869 A1 dargestellt, besitzt ebenfalls nur eine geringe mechanische Festigkeit.

Deshalb ist es Aufgabe der Erfindung, eine solche Abdeckung bereitzustellen, bei der die Verbindung zwischen Scharnierband und Kern hochbelastbar ausgebildet und einfach aufgebaut ist.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist das Scharnierband, das an seinem einen Ende mit dem Kern formschlüssig verbunden ist, mit der Abdeckung verbunden, indem es in Richtung seines anderen Endes, das außerhalb der Polsterschicht liegt, durch die weitere Aushenmungen des Kerns durchgeführt ist.

Eine solche Verbindung zwischen Kem und Scharnierband der Abdeckung wirkt sich vom Kraftverlauf besonders günstig aus und hat den Vorteil, daß ihre Festigkeit, insbesondere in Zugrichtung der Scharnierbänder, besonders groß ist. Die Abdeckung wird also zuverlässig durch das Schamierband zurückgehalten und ist trotzdem einfach aufgebaut.

Bei einer weiteren Ausführung der Erfindung ist es für die Beeinflussung der Öffnungsbewegung von Vorteil, wenn die formschlüssige Verbindung des Schamierbands mit dem Kern auf der Seite des Kerns ausgeführt ist, die zum Gassackmodul hin gerichtet ist und das Schamierband im weiteren Verlauf so durch mindestens zwei Ausnehmungen im Kern geführt ist, daß es sich mindestens einmal auf der Seite des Kerns befindet, die zu einem Fahrzeuginnenraum hin gerichtet ist, wobei das Schamierband durch die letzte Ausnehmung des Kerns, gesehen in Richtung des anderen Endes des Scharnierbands, von der Seite des Kerns, die zu dem Fahrzeuginnenraum hin gerichtet ist, auf die Seite des Kerns, die zum Gassackmodul hin gerichtet ist, durch den Kern geführt ist.

Bei einer bevorzugten Ausführung der Erfindung ist das Scharnierband an seinem einen Ende über eine erste Befestigungseinrichtung, insbesondere einen ersten Bügel, am Kern angebracht und an seinem anderen Ende über eine zweite Befestigungseinrichtung, insbesondere einen zweiten Bügel, an einem Karosseriekörper angebracht. Auf diese Weise kann das Scharnierband sehr einfach formschlüssig festgelegt werden, z. B. dadurch, daß es an seinem einen Ende eine Lasche bildet, die um die erste Befestigungseinrichtung, insbesondere den ersten Bügel, herumgeschleift ist. Mit dem anderen Ende des Scharnierbandes ist es ebenso möglich, eine Lasche zu bilden, die um die zweite Befestigungseinrichtung, insbesondere den zweiten Bügel, herumgeschleift ist. Eine solche Ausführung des Scharnierbandes mit jeweils einer Lasche an seinen Enden, die formschlüssig, z. B. durch Bügel, sowohl am Kern, als auch am Karosseriekörper festgelegt sind, ergibt eine einfache und montagefreundliche Ausführung einer Befestigung des Scharnierbands auf seinen beiden Seiten.

Bei einer weiteren vorteilhaften Ausführung der Erfindung ist die erste Befestigungseinrichtung, insbesondere der erste Bügel, lösbar am Kern festgelegt, insbesondere durch Haltemittel, die eine formschlüssige Verbindung durch Einclipsen der ersten Befestigungseinrichtung, insbesondere des ersten Bügels, in den Kern ermöglichen. Das Herstellen der formschlüssigen Verbindung der ersten Befestigungseinrichtung mit dem Kern durch Einclipsen hat den Vorteil, daß das Scharnierband einfach, schnell und zuverlässig am Kern befestigt werden kann. Ist die erste Befestigungseinrichtung als Bügel ausgeführt, wird dieser durch die Lasche des Scharnierbandes durchgesteckt und hinter Vorsprünge in den Kern der Abdeckung eingeclipst.

Bei einer weiteren vorteilhaften Ausführung der Erfindung entsteht beim Zurückhalten der Abdeckung ein sehr günstiger Kraftverlauf, wenn mindestens zwei Scharnierbänder in im wesentlichen paralleler Anordnung zum Halten der Abdeckung verwendet werden. Dadurch wird die Abdeckung in Querrichtung des Fahrzeugs besser auf ihrer Bewegungsbahn geführt und die Bruchsicherheit für die Scharnierbänder wird erhöht.

Bei einer weiteren bevorzugten Ausführung der Erfindung ist mindestens ein weiteres Scharnierband mit der Abdeckung verbunden, das im wesentlichen quer zu dem Scharnierband verläuft, das die Abdeckung auf ihrer Bewegungsbahn hält. Das hat den Vorteil, daß zusätzlich zum Halten der Abdeckung auf einer definierten Bewegungsbahn, noch der Öffnungswinkel der Abdeckung durch die Länge des weiteren Scharnierbandes exakt begrenzt werden kann. Bei nach schräg oben sich aus der Armaturentafel herausbewegender Abdeckung, kann durch die Begrenzung des Öffnungswinkels vorteilhafterweise eine Zerstörung der Windschutzscheibe verhindert werden. Besonders günstig zur Öffnungswinkelbegrenzung der Abdeckung hat sich erwiesen, wenn das weitere Scharnierband im wesentlichen quer zu dem Scharnierband verläuft, das die Abdeckung auf ihrer Bewegungsbahn hält.

Eine weitere bevorzugte Ausführung der Erfindung sieht vor, daß das weitere Scharnierband mit jedem seiner beiden Enden über die zweite Befestigungseinrichtung, insbesondere den zweiten Bügel, am Karosseriekörper angebracht ist. Das hat den Vorteil, daß zur Öffnungswinkelbegrenzung der Abdeckung nur ein weiteres Scharnierband nötig ist, das die auftretenden Kräfte günstig von der Abdeckung über die zweite Befestigungseinrichtung an den Karosseriekörper weiterleitet.

Das Scharnierband mit den Laschen und/oder das weitere Scharnierband ist in einer weiteren vorteilhaften Ausführung der Erfindung sehr einfach und kostengünstig ausführbar, wenn dieses aus Gewebe besteht, dessen erstes und/oder zweites Ende zu einer Lasche vernäht ist. Insbesondere bei langen Scharnierbändern, z. B. mit einem Längen-/Breitenverhältnis größer 1, ist es von Vorteil für die Stabilität, Gewebeband zu verwenden. Die zweite Befestigungseinrichtung, insbesondere der zweite Bügel, kann dabei vorteilhafterweise in größerer Entfernung zur Armaturentafel, z. B. am Karosseriekörper, vorgesehen werden.

Ein bevorzugtes Ausführungsbeispiel der Erfindung ist in der nachfolgenden Beschreibung und der zugehörigen Zeichnung näher dargestellt. Es zeigen:
- Fig. 1: eine Abdeckung für eine Gassackrückhalteeinrichtung mit ihrer Befestigungseinrichtung am Karosseriekörper,
- Fig. 2: den Kern einer Abdeckung für eine Gassackrückhalteeinrichtung in Draufsicht mit durchgeschleiften und an ihm festgelegten Scharnierbändern.

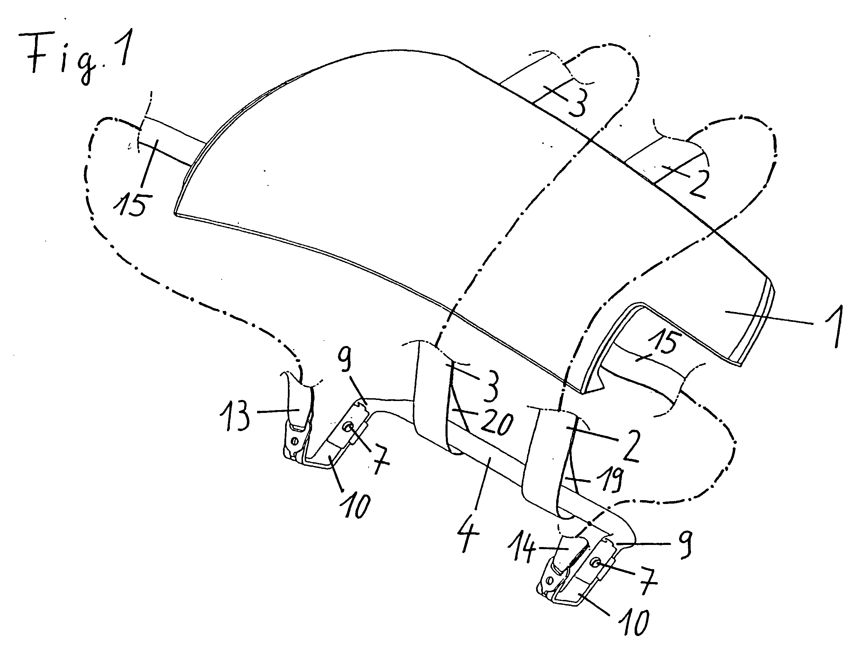

Fig. 1 zeigt eine Abdeckung 1 für eine Gassackrückhalteeinrichtung in einer nicht gezeichneten Armaturentafel eines nicht gezeichneten Kraftfahrzeugs. Die Abdeckung 1 dient zum Verschließen einer Öffnung in der Armaturentafel und wird nach dem Auslösen eines nicht gezeichneten Gassackmoduls von einem nicht gezeichneten Gassack zum Innenraum des Kraftfahrzeugs hin aufgestoßen und von zwei Scharnierbändern 2, 3 mindestens auf einer Teilstrecke ihrer Öffnungsbewegung auf einer definierten Bewegungsbahn gehalten. Dazu sind die Scharnierbänder 2, 3 über einen zweiten Bügel 4 am Fahrzeug festgelegt, insbesondere an einem nicht gezeichneten Karosseriekörper des Fahrzeugs, zum Beispiel einem Querträger, der unter der Armaturentafel verläuft.

Im Bereich vor einem nicht gezeichneten Beifahrersitz ist an dem Querträger eine nicht gezeichnete Halteeinrichtung angebracht. Sie besteht aus zwei nicht gezeichneten Gewindebolzen zur Aufnahme des zweiten Bügels 4 über Bohrungen 7 und eines nicht gezeichneten Gassackmoduls und zu deren Festlegung durch nicht gezeichnete Gewindemuttern, die auf die Gewindebolzen aufgeschraubt werden.

Der zweite Bügel 4 besitzt, ausgehend von seiner Befestigungsstelle an der Halteeinrichtung, den Bohrungen 7, jeweils zwei Hebelarme 9, 10. Dabei sind die ersten Hebelarme 9 miteinander so verbunden, daß der zweite Bügel 4 in Draufsicht etwa U-förmig gebogen ist und als jeweiligen Schenkel auf jeder Seite die beiden Hebelarme 9, 10 besitzt. Die Schenkel sind in Seitenansicht im wesentlichen S-förmig ausgebildet, wobei die Befestigungsstelle des zweiten Bügels 4 am Karosseriekörper, die Bohrungen 7, etwa in der Mitte liegt. Die zweiten Hebelarme 10 der Schenkel erstrecken sich von der Befestigungsstelle des zweiten Bügels 4, den Bohrungen 7, von den ersten Hebelarmen 9 weggerichtet und besitzen an ihrem Ende jeweils eine Aufnahmeeinrichtung für ein Ende 13, 14 eines weiteren Schamierbandes 15. Das weitere Scharnierband 15 ist mit der Abdeckung 1 verbunden, indem es durch in dieser Figur nicht sichtbare Ausnehmungen 5 in einem ebenfalls in dieser Figur nicht sichtbaren Kern 6 der Abdeckung 1 durchgeführt ist. Desweiteren sind mit der Abdeckung 1 die einen Enden zweier Scharnierbänder 2,3 fest verbunden, die im wesentlichen quer zu dem weiteren Scharnierband 15 verlaufen. Die anderen Enden der beiden Scharnierbänder 2,3 bilden jeweils eine Lasche 19, 20, die um den zweiten Bügel 4 herumgeschleift ist.

Die Befestigungsstellen der Scharnierbänder 2,3 und des weiteren Scharnierbandes 15 am zweiten Bügel 4 sind in der Zeichnung dargestellt, während der Verlauf der Scharnierbänder 2,3 und des weiteren Scharnierbandes 15 nur angedeutet gezeichnet ist, durch strichpunktierte Linien, anschließend an Bruchlinien.

Die Abdeckung 1 ist an den in dieser Figur nicht sichtbaren einen Enden der Scharnierbänder 2,3 angebracht und wird von diesen und von dem weiteren Scharnierband 15 nach dem Auslösen des Gassackmoduls auf einer definierten Bewegungsbahn gehalten. Dabei legen die Scharnierbänder 2,3 die Bewegungsbahn der Abdeckung 1 fest und das weitere Scharnierband 15 begrenzt deren Öffnungswinkel.

Die Abdeckung 1 ist in die nicht gezeichnete Armaturentafel herausnehmbar eingesetzt, in einer Entfernung vom zweiten Bügel 4, daß das Längen-/Breitenverhältnis der Scharnierbänder 2,3 und des weiteren Scharnierbandes 15 größer als 1 ist. Die Scharnierbänder 2,3 und das weitere Scharnierband 15 sind aus einem Gewebeband hergestellt.

Die beiden Enden der Scharnierbänder 2,3, zum zweiten Bügel 4 hin, sind zu Laschen 19, 20 vernäht, die auch im nicht montierten Zustand des zweiten Bügels 4 unverlierbar auf diesem gehalten werden. Der zweite Bügel 4 ist ein Blechpreßteil, das aus einem Rohr durch Zusammenpressen seiner Enden hergestellt ist. Unverlierbar und verschiebbar festgelegt sind die Scharnierbänder 2,3 durch Verkleinern der Laschen 19, 20, durch formschlüssiges Verbinden der Innenseiten des die Laschen 19, 20 bildenden Gewebebandes, nach dem Aufschieben über ein Ende des zweiten Bügels 4. Im montierten Zustand des zweiten Bügels 4 sind die Scharnierbänder 2,3, in Längsrichtung des zweiten Bügels 4 gesehen, über einen Bereich des zweiten Bügels 4, bis zu den Gewindebolzen für die Bohrungen 7, verschiebbar auf dem zweiten Bügel 4 gesichert.

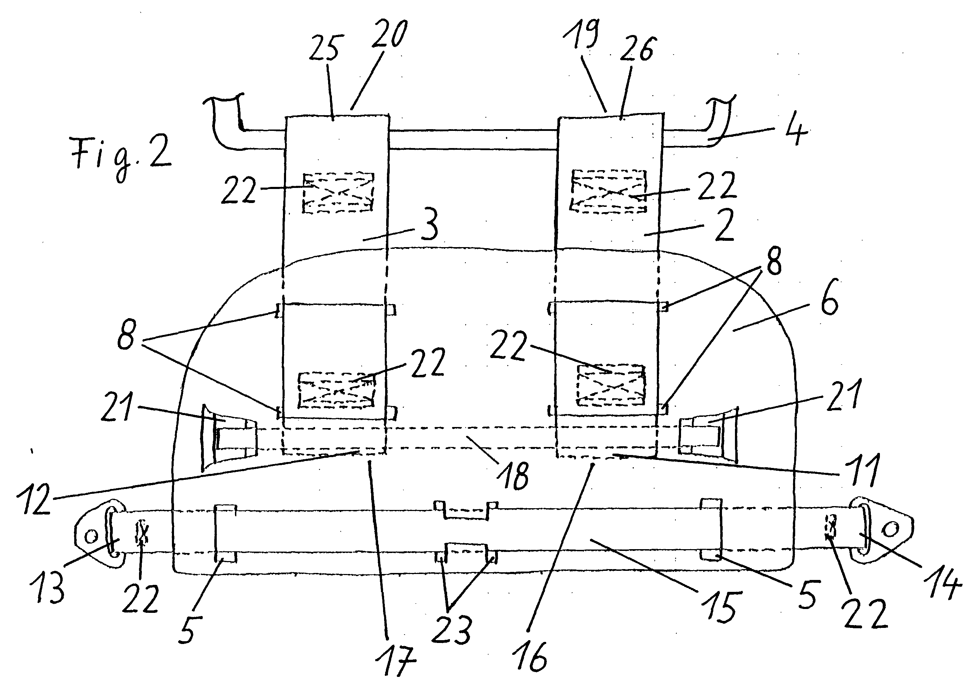

Von der Abdeckung 1 ist in Figur 1 größtenteils nur eine außenliegende Polsterschicht sichtbar. In der Polsterschicht eingebettet ist ein formsteifer Kern 6, an dem die Scharnierbänder 2, 3 mit jeweils ihrem einen Ende 11, 12 formschlüssig festgelegt sind. Vom zweiten Bügel 4 herkommend führen die Scharnierbänder 2, 3 in die Polsterschicht der Abdeckung 1 hinein und sind von dieser, einschließlich ihrer einen Enden 11, 12, mit dem Kern 6 eingegossen. Die Verbindung der Scharnierbänder 2,3 mit dem Kern 6 ist in Figur 2 dargestellt.

Figur 2 zeigt den Kern 6 einer Abdeckung 1 (Figur 1) für eine Gassackrückhalteeinrichtung in Draufsicht, wobei die Polsterschicht, die den Kern 6 normalerweise umgibt, weggelassen ist. Die beiden Scharnierbänder 2, 3 und das weitere Scharnierband 15 sind verkürzt gezeichnet.

Der Kern 6 besitzt für jeweils eines der Scharnierbänder 2, 3 jeweils zwei Ausnehmungen 8, durch die dieses durchgeführt ist. Dabei sind die einen Enden 11, 12 der Scharnierbänder 2, 3, die in der Polsterschicht liegen, formschlüssig an einem ersten Bügel 18 festgelegt, der wiederum formschlüssig mit dem Kern 6 verbunden ist. Dazu ist der erste Bügel 18 an seinen beiden Enden ebenfalls durch den Kern 6 hindurchgeführt und über Vorsprünge 21 am Kern 6 formschlüssig fixiert. Zur formschlüssigen Verbindung zwischen den Scharnierbändern 2, 3 und dem ersten Bügel 18 sind die einen Enden 11, 12 der Scharnierbänder 2, 3 um den ersten Bügel 18 herumgeschleift und zu Laschen 16, 17 vernäht.

Beim Zusammenbau der Scharnierbänder 2, 3 mit dem Kern 6 werden diese mit ihren Laschen 16, 17 auf den ersten Bügel 18 aufgeschoben und dann der erste Bügel 18 mit seinen Enden durch den Kern 6 hindurchgesteckt und hinter die Vorsprünge 21 des Kerns 6 eingeclipst.

Von ihrer formschlüssigen Festlegung am Kern 6, über den ersten Bügel 18, verlaufen die beiden Scharnierbänder 2, 3 parallel durch je eine Ausnehmung 8 von der Seite des Kerns 6, die zum Gassackmodul hingerichtet ist, auf die Seite des Kerns 6, die zu einem Fahrzeuginnenraum hin gerichtet ist. Dann weiter auf der zum Fahrzeuginnenraum hin gerichteten Seite des Kerns 6 zu der jeweils nächsten Ausnehmung 8, durch diese hindurch wieder auf die Seite des Kerns 6, die zum Gassackmodul hin gerichtet ist und von dort zum zweiten Bügel 4, an diesem formschlüssig befestigt durch die Laschen 19, 20, die um diesen herumgeschleift sind. Angedeutet gezeichnet sind für die jeweiligen Enden 11, 12, 25, 26 der Scharnierbänder 2, 3, die Nähte 22, mit denen sie zu Laschen 16, 17, 20,19 vernäht sind.

Das weitere Scharnierband 15 verläuft quer zu den Scharnierbändern 2, 3 und ist am Kern 6 durch Durchführen durch Ausnehmungen 5 befestigt. Beide Enden 13, 14 des weiteren Scharnierbandes 15 (verkürzt gezeichnet) sind über Befestigungsmittel an jeweils einem Hebelarm 10 des zweiten Bügels 4 angebracht (Figur 1). Von beiden Enden 13, 14, des weiteren Scharnierbandes 15 her gesehen, ist dieses zuerst auf der Seite des Kerns 6, die zum Gassackmodul hinzeigt, geführt, zu Ausnehmungen 5 im Kern 6, durch diese hindurch, auf die Seite des Kerns 6, die zum Fahrzeuginnenraum hin zeigt und von dort über eine mittlere Ausnehmung 23 wieder auf die Seite, die zum Gassackmodul hingerichtet ist.

## Patentansprüche

1. Abdeckung (1) für eine Gassackrückhalteeinrichtung in einer Armaturentafel eines Kraftfahrzeugs, aus mindestens einem formsteifen Kern (6) und mindestens einer Polsterschicht, wobei die Gassackrückhalteeinrichtung aus einem Gassackmodul hinter der Armaturentafel besteht und die Abdeckung (1), die zum Verschließen einer Öffnung in der Armaturentafel dient, nach dem Auslösen des Gassackmoduls von einem Gassack zum Innenraum des Kraftfahrzeugs hin aufgestoßen und von mindestens einem Scharnierband (2,3), mindestens auf einer Teilstrecke ihrer Öffnungsbewegung, auf einer definierten Bewegungsbahn gehalten wird, wobei das Scharnierband (2,3) mit der Abdeckung (1) verbunden ist, indem es durch Ausnehmungen (8) des Kerns (6) durchgeführt, an einem Ende (11,12) formschlüssig mit diesem verbunden und von der Polsterschicht mindestens teilweise umgeben ist, **dadurch gekennzeichnet**, daß das Scharnierband (2,3) in Richtung seines anderen Endes (25,26), das außerhalb der Polsterschicht liegt, durch weitere Ausnehmungen (8) des Kerns (6) durchgeführt ist.

2. Abdeckung (1) nach Anspruch 1, **dadurch gekennzeichnet**, daß die formschlüssige Verbindung des Scharnierbands (2,3) mit dem Kern (6) auf der Seite des Kerns (6) ausgeführt ist, die zum Gassackmodul hin gerichtet ist und das Scharnierband (2,3) im weiteren Verlauf so durch mindestens zwei Ausnehmungen (8) im Kern (6) geführt ist, daß es sich mindestens einmal auf der Seite des Kerns (6) befindet, die zu einem Fahrzeuginnenraum hin gerichtet ist, wobei das Scharnierband (2,3) durch die letzte Ausnehmung (8) des Kerns (6), gesehen in Richtung des anderen Endes (25,26) des Scharnierbands (2,3), von der Seite des Kerns (6), die zu dem Fahrzeuginnenraum hin gerichtet ist, auf die Seite des Kerns (6), die zum Gassackmodul hin gerichtet ist, durch den Kern (6) geführt ist.

3. Abdeckung (1) nach einem der Ansprüche 1 oder 2, **dadurch gekennzeichnet,** daß das Schamierband (2,3) an seinem einen Ende (11,12) über eine erste Befestigungseinrichtung, insbesondere einen ersten Bügel (18), am Kern (6) angebracht ist und an seinem anderen Ende (25,26) über eine zweite Befestigungseinrichtung, insbesondere einen zweiten Bügel (4), an einem Karosseriekörper angebracht ist.

4. Abdeckung (1) nach Anspruch 3, **dadurch gekennzeichnet**, daß das Scharnierband (2,3) an seinem einen Ende (11,12) eine Lasche (16,17) bildet, die um die erste Befestigungseinrichtung, insbesondere den ersten Bügel (18), herumgeschleift ist.

5. Abdeckung (1) nach Anspruch 3 oder 4, **dadurch gekennzeichnet**, daß das Schamierband (2,3) an seinem anderen Ende (26,25) eine Lasche (19,20) bildet, die um die zweite Befestigungseinrichtung, insbesondere um den zweiten Bügel (4), herumgeschleift ist.

6. Abdeckung (1) nach einem der Ansprüche 3 bis 5, **dadurch gekennzeichnet,** daß die erste Befestigungseinrichtung, insbesondere der erste Bügel (18), lösbar am Kern (6) festgelegt ist, insbesondere durch Haltemittel, die eine formschlüssige Verbindung durch Einclipsen der ersten Befestigungseinrichtung, insbesondere des ersten Bügels (18), in den Kern (6) ermöglichen.

7. Abdeckung (1) nach einem der Ansprüche 1 bis 6, **dadurch gekennzeichnet,** daß mindestens zwei Schamierbänder (2,3) in im wesentlichen paralleler Anordnung mit der Abdeckung (1) verbunden sind.

8. Abdeckung (1) nach einem der Ansprüche 1 bis 7, **dadurch gekennzeichnet,** daß mindestens ein weiteres Scharnierband (15) mit der Abdeckung (1) verbunden ist, das im wesentlichen quer zu dem Schamierband (2,3) verläuft, das die Abdeckung (1) auf ihrer Bewegungsbahn hält.

9. Abdeckung (1) nach Anspruch 8, **dadurch gekennzeichnet**, daß das weitere Scharnierband (15) mit der Abdeckung (1) verbunden ist, indem es durch mindestens eine Ausnehmung (5) der Abdeckung (1) durchgeführt ist.

10. Abdeckung (1) nach einem der Ansprüche 8 oder 9, **dadurch gekennzeichnet,** daß das weitere Scharnierband (15) mit jedem seiner beiden Enden (13,14) über die zweite Befestigungseinrichtung, insbesondere den zweiten Bügel (4), am Karosseriekörper angebracht ist.

11. Abdeckung (1) nach einem der Ansprüche 4 bis 10, **dadurch gekennzeichnet,** daß das Scharnierband (2,3) und/oder das weitere Scharnierband (15) ein Gewebeband ist, dessen eines (11,12,13) und/oder anderes Ende (26,25,14) zu einer Lasche (16,17,19,20) vernäht ist.

12. Abdeckung (1) nach einem der Ansprüche 1 bis 11, **dadurch gekennzeichnet,** daß das Längen-/Breitenverhältnis des Scharnierbands (2,3) und/oder des weiteren Scharnierbands (15) größer 1 ist.

## Claims

1. A cover (1) for an air bag restraining device in an instrument panel of a motor vehicle, of at least one rigid core (6) and at least one cushioning layer, whereby the air bag restraining device comprises an air bag module behind the instrument panel and the cover (1), which serves to close the opening in the instrument panel, after the release from the air bag module of an air bag, is pushed into the interior of the vehicle, and is held by at least one hinge band (2, 3) for at least a part of the way of its opening movement on a defined movement path, whereby the hinge band (2, 3) is joined to the cover (1), in that it is taken through cut-outs (8) in the core (6), joined with a positive engagement to it at one end (11, 12) and is surrounded at least partly by the cushioning layer, **characterised in that** the hinge band (2, 3) in the direction of its other end (25, 26), which lies outside the cushioning layer, is taken through further cut-outs (8) in the core (6).

2. A cover (1) according to Claim 1, **characterised in that** the positive connection of the hinge band (2, 3) with the core (6) is carried out on that side of the core (6), which faces the air bag module and the hinge band (2, 3) is taken through at least two cut-outs (8) in the core (6) in its further progress, that it is positioned at least once on that side of the core (6) which faces the interior space of the vehicle, whereby the hinge band (2, 3) is taken through the last cut-out (8) of the core (6) as seen in the direction of the other end (25, 26) of the hinge band (2, 3) from the side of the core (6) which faces the interior of the vehicle, to the side of the core (6) which faces the air bag module, through the core (6).

3. A cover (1) according to one of the Claims 1 or 2, **characterised in that** one end (11, 12) of the hinge band (2, 3) is attached to the core (6) by a first fastening device, especially a first yoke (18) and its other end (25, 26) is attached to a part of the bodywork via a second fastening device, especially a second yoke (4).

4. A cover (1) according to Claim 3, **characterised in that** at one end (11, 12) the hinge band (2, 3) forms a tongue (16, 17) which is looped around the first fastening device, especially the first yoke (18).

5. A cover (1) according to Claim 3 or Claim 4, **characterised in that** at its other end (26, 25) the hinge band (2, 3) forms a tongue (19, 20) which is looped around the second fastening device, especially the second yoke (4).

6. A cover (1) according to one of the Claims 3 to 5, **characterised in that** the first fastening device, especially the first yoke (18) is held in place detachably on the core (6), especially by retaining means which facilitate a positive engagement by clipping the first fastening device, especially the first yoke (18) into the core (6).

7. A cover (1) according to one of the Claims 1 to 6, **characterised in that** at least two hinge bands (2, 3) are joined to the cover (1) in an essentially parallel arrangement.

8. A cover (1) according to one of the Claims 1 to 7, **characterised in that** at least one further hinge band (15) is joined to the cover (1), which runs essentially at right angles to the hinge band (2, 3), which arrests the cover (1) on its movement path.

9. A cover (1) according to Claim 8, **characterised in that** the further hinge band (15) is joined to the cover (1), in that it is taken through at least one cut-out (5) in the cover (1).

10. A cover (1) according to one of the Claims 8 or 9, **characterised in that** each of the two ends (13, 14) of the further hinge band (15) is attached to the bodywork via the second fastening device, especially the second yoke (4).

11. A cover (1) according to one of the Claims 4 to 10, **characterised in that** the hinge band (2, 3) and/or the further hinge band (15) is a woven band, of which one (11, 12, 13) and/or the other end (26, 25, 14) is sewn to a tongue (16, 17, 19, 20).

12. A cover (1) according to one of the Claims 1 to 11, **characterised in that** the length to breadth ratio of the hinge band (2, 3) and/or the further hinge band (15) is greater than 1.

## Revendications

1. Couvercle (1) pour un système de retenue de coussin de sécurité logé dans le tableau de bord d'un véhicule, composé d'au moins un noyau (6) de forme rigide et d'au moins une couche de rembourrage, dans lequel :
- le système de retenue de coussin de sécurité est composé d'un module de coussin de sécurité situé derrière le tableau de bord,
- le couvercle (1) qui sert à obturer une ouverture du tableau de bord, est, après le déclenchement du module, poussé vers l'habitacle du véhicule et, par au moins un ruban de charnière (2, 3) est maintenu sur une trajectoire définie pendant au moins une partie de son mouvement d'ouverture,
- le ruban de charnière (2, 3) est relié au couvercle (1), par passage à travers un évidement (8) du noyau (6) auquel il est relié à une extrémité (11, 12) par combinaison de formes, et en étant au moins en partie entouré par la couche de rembourrage,
**caractérisé en ce que**
le ruban de charnière (2, 3), en direction de son autre extrémité (25, 26) située à l'extérieur de la couche de rembourrage, passe à travers un autre évidement (8) du noyau (6).

2. Couvercle (1) selon la revendication 1,
**caractérisé en ce que**
la liaison par combinaison de formes du ruban de charnière (2, 3) avec le noyau (6), a lieu sur le côté du noyau (6) situé en regard du module de coussin de sécurité, et le ruban (2, 3) poursuit son parcours en traversant au moins deux évidements (8) du noyau (6) de manière à se trouver, au moins une fois, du côté du noyau (6) situé en regard de l'habitacle, puis, en traversant le dernier évidement (8), le ruban (2, 3), observé en direction de son autre extrémité (25, 26), passe à travers le noyau (6) du côté situé en regard de l'habitacle à celui situé en regard du module de coussin de sécurité.

3. Couvercle (1) selon la revendication 1 ou 2,
**caractérisé en ce que**
le ruban de charnière (2, 3) à l'une de ses extrémités (11, 12) est monté sur le noyau (6) par l'intermédiaire d'un dispositif de fixation, en particulier un premier étrier (18), tandis que par son autre extrémité (25, 26) il est monté sur un élément de la carrosserie par l'intermédiaire d'un second dispositif de fixation, en particulier un second étrier (4).

4. Couvercle (1) selon la revendication 3,
**caractérisé en ce que**
le ruban de charnière (2, 3) forme à son extrémité (11, 12) un collier (16, 17) qui entoure le premier dispositif de fixation, en particulier le premier étrier (18).

5. Couvercle (1) selon la revendication 3 ou 4,
**caractérisé en ce que**
le ruban de charnière (2, 3) forme, à son autre extrémité (25, 26) un collier (19, 20) qui entoure le second dispositif de fixation, en particulier le second étrier (4).

6. Couvercle (1) selon l'une quelconque des revendications 3 à 5,
**caractérisé en ce que**
le premier dispositif de fixation, en particulier le premier étrier (18) est fixé de manière amovible au noyau (6), en particulier par des moyens de maintien permettant une liaison par combinaison de formes assurée par clipsage du premier dispositif de fixation, en particulier du premier étrier (18) sur le noyau (6).

7. Couvercle selon l'une quelconque des revendications 1 à 6,
**caractérisé en ce qu**'
au moins deux rubans de charnière (2, 3), essentiellement parallèles entre eux, sont reliés au couvercle (1).

8. Couvercle (1) selon l'une quelconque des revendications 1 à 7,
**caractérisé en ce qu**'
au couvercle (1) est relié au moins un autre ruban de charnière (15) qui est sensiblement perpendiculaire aux rubans de charnière (2, 3) qui maintiennent le couvercle (1) sur sa trajectoire de déplacement.

9. Couvercle (1) selon la revendication 8,
**caractérisé en ce que**
l'autre ruban de charnière (15) est relié au couvercle (1) en traversant au moins une ouverture (5) du couvercle (1).

10. Couvercle (1) selon l'une des revendications 8 ou 9,
**caractérisé en ce que**
l'autre ruban de charnière (15) est monté par ses deux extrémités (13, 14) sur un élément de carrosserie, par l'intermédiaire du second dispositif de fixation, en particulier le second étrier (4).

11. Couvercle (1) selon l'une quelconque des revendications 4 à 10,
**caractérisé en ce que**
le ruban de charnière (2, 3) et/ou l'autre ruban de charnière (15) est un ruban tissé, dont une extrémité (11, 12, 13) et/ou l'autre extrémité (26, 25, 14) est cousue de manière à former un collier (16, 17, 19, 20).

12. Couvercle (1) selon l'une quelconque des revendications 1 à 11,
**caractérisé en ce que**
le rapport longueur/largeur du ruban de charnière (2, 3) et/ou de l'autre ruban de charnière (15) est supérieur à 1.
